# EUROPEAN PATENT APPLICATION

(11) **EP 4 474 983 A1**
(43) Date of publication of application: **11.12.2024**
(21) Application number: 24168213.7
(22) Date of filing: 03.04.2024
(51) Int. Cl.: G06F 9/4401, G06F 11/14

(54) **MEMORY-PARTITION-BASED DEVICE-STARTUP METHOD AND APPARATUS, AND ELECTRONIC DEVICE**

(30) Priority: 09.06.2023 CN 202310686677
(71) Applicant: Beijing Horizon Information Technology Co., Ltd., Beijing 100094 (CN)
(72) Inventor: YU, Ming, Beijing, 100094 (CN); LING, Xiaofeng, Beijing, 100094 (CN)
(74) Representative: Kolster Oy Ab

(57) **Abstract**

Disclosed are a memory-partition-based device-startup method and apparatus, a computer readable storage medium, and an electronic device. The method includes: determining a boot status of an electronic device in a first boot mode at a preset occasion; reading, based on the boot status, first boot information from a first partition of a target memory; booting the electronic device in a second boot mode based on the first boot information, and acquiring system update information for the electronic device from a system update server; updating, based on the system update information, second boot information in a second partition of the target memory; and booting the electronic device in the first boot mode based on the updated second boot information.

## Description

### FIELD OF THE INVENTION

The present disclosure relates to the technical filed of computers, and in particular, to a memory-partition-based device-startup method and apparatus, a computer readable storage medium, and an electronic device.

### BACKGROUND OF THE INVENTION

For boot, a processor needs to load boot code from an external memory. After the boot, during use of an operating system, it is needed to continually perform read and write operations on the external memory, such as reading a stored log file. If there is a fault in a running application and data is mistakenly written to an area where the boot code is stored, or due to some characteristics of the memory, even though data is written to an area where the boot code is not stored, damages may also be caused to the boot code. As a result, the operating system may not be booted.

For example, a system backup (recovery) image file and a normal boot image file are placed on a same physical partition. In a case where the system backup image file is not updated, due to a function of a writing and erasing balance mechanism of an EMMC (embedded multimedia card) memory, there is still a possibility that the system backup image file is modified when another area of the physical partition is updated. This may cause the operating system to fail to be booted.

Therefore, it is a problem to be resolved currently how to ensure that a device may boot and run the operating system normally.

### SUMMARY OF THE INVENTION

To resolve the forgoing technical problem, embodiments of the present disclosure provide a memory-partition-based device-startup method and apparatus, a computer readable storage medium, and an electronic device, to isolate physically first boot information used during normal boot from back-up second boot information, to ensure that the electronic device may be booted by the back-up second boot information in a case of a boot failure.

An embodiment of the present disclosure provides a memory-partition-based device-startup method. The method includes: determining a boot status of an electronic device in a first boot mode at a preset occasion; reading, based on the boot status, first boot information from a first partition of a target memory; booting the electronic device in a second boot mode based on the first boot information, and acquiring system update information for the electronic device from a system update server; updating, based on the system update information, second boot information in a second partition of the target memory; and booting the electronic device in the first boot mode based on the updated second boot information.

According to another aspect of an embodiment of the present disclosure, provided is a memory-partition-based device-startup apparatus, including: a determination module, configured to determine a boot status of an electronic device in a first boot mode at a preset occasion; a first read module, configured to read, based on the boot status, first boot information from a first partition of a target memory; a first boot module, configured to boot the electronic device in a second boot mode based on the first boot information, and acquire system update information for the electronic device from a system update server; an update module, configured to update, based on the system update information, second boot information in a second partition of the target memory; and a second boot module, configured to boot the electronic device in the first boot mode based on the updated second boot information.

According to another aspect of an embodiment of the present disclosure, provided is a computer readable storage medium, which a computer program is stored, where the computer program, when executed by a processor, causes the processor to implement the foregoing memory-partition-based device-startup method.

According to another aspect of an embodiment of the present disclosure, provided is an electronic device, including: a processor; and a memory configured to store a processor-executable instruction, where the processor is configured to read the executable instruction from the memory, and execute the instruction to implement the foregoing memory-partition-based device-startup method.

According to another aspect of an embodiment of the present disclosure, provided is a computer program product, including computer program instructions. When the computer program instructions are executed by a processor to cause the processor to implement the memory-partition-based device-startup method provided in the present disclosure.

Based on the memory-partition-based device-startup method and apparatus, the computer readable storage medium, and the electronic device that are provided in foregoing embodiments of the present disclosure, the first boot information and the second boot information are stored in the first partition and the second partition of the target memory, respectively. Based on the boot status of the electronic device in the first boot mode, the electronic device is booted in the second boot mode by using the first startup information. Moreover, the second boot information in the second partition is updated, and the electronic device is booted in the first boot mode by using the updated second boot information. In this way, the first boot information is isolated from the second boot information in the memory, and read and write operations of the processor for the first partition and the second partition do not affect each other. In this case, the second boot information used for normal boot of the electronic device may be updated timely, so that a boot success rate of the electronic device is greatly improved.

The technical solutions of the present disclosure are further described below in detail with reference to the accompanying drawings and the embodiments.

### BRIEF DESCRIPTION OF THE DRAWINGS

By describing the embodiments of the present disclosure more detailed with reference to the accompanying drawings, the foregoing and other objectives, features, and advantages of the present disclosure will become more apparent. The accompanying drawings are provided, as a part of the specification, for facilitating further understanding of the embodiments of the present disclosure and for explaining the present disclosure together with the embodiments of the present disclosure, and are not construed as limiting the present disclosure. In the accompanying drawings, same reference numerals generally represent same components or steps.
FIG. 1 is a diagram of a system to which the present disclosure is applicable;
FIG. 2 is a schematic flowchart of a memory-partition-based device-startup method according to an exemplary embodiment of the present disclosure;
FIG. 3 is a schematic flowchart of a memory-partition-based device-startup method according to another exemplary embodiment of the present disclosure;
FIG. 4 is a schematic flowchart of a memory-partition-based device-startup method according to another exemplary embodiment of the present disclosure;
FIG. 5 is a schematic flowchart of a memory-partition-based device-startup method according to another exemplary embodiment of the present disclosure;
FIG. 6 is a schematic diagram of a structure of a memory-partition-based device-startup apparatus according to an exemplary embodiment of the present disclosure;
FIG. 7 is a schematic diagram of a structure of a memory-partition-based device-startup apparatus according to another exemplary embodiment of the present disclosure; and
FIG. 8 is a diagram of a structure of an electronic device according to an exemplary embodiment of the present disclosure.

### DETAILED DESCRIPTION OF THE EMBODIMENTS

To explain the present disclosure, exemplary embodiments of the present disclosure are described below in detail with reference to accompanying drawings. Obviously, the described embodiments are merely a part, rather than all, of embodiments of the present disclosure. It should be understood that the present disclosure is not limited by the exemplary embodiments.

It should be noted that the scope of the present disclosure is not limited by relative arrangement, numeric expressions, and numerical values of components and steps described in these embodiments, unless otherwise specified.

### Application Overview

To reduce risks of misoperations to boot information, currently used methods are typically to isolate boot information (such as a bootloader) used during normal boot from information available to a user after the boot, in order to prevent the boot information from being damaged and no more upgrade a partition in which the boot information is stored. For example, the boot information is placed in a boot partition of a memory (such as a boot partition of an EMMC), while other contents such as a system backup (recovery) image, system kernel information, and various application data are placed in a user data partition. During a system update, only the content in the user data partition is upgraded.

According to this method, only the content in the user data partition may be upgraded, while the content in the boot partition may not be upgraded. As a result, when a device fails to be booted by the boot partition, the boot information may not be automatically repaired.

To resolve this problem, embodiments of the present disclosure provide a memory-partition-based device-startup method. According to this method, first boot information is isolated from second boot information in a memory. If a boot failure occurs during normal device startup, the second boot information may be updated timely by using the system update information, and the device is booted by using the updated second boot information, which greatly improves a boot success rate of an electronic device.

### Exemplary System

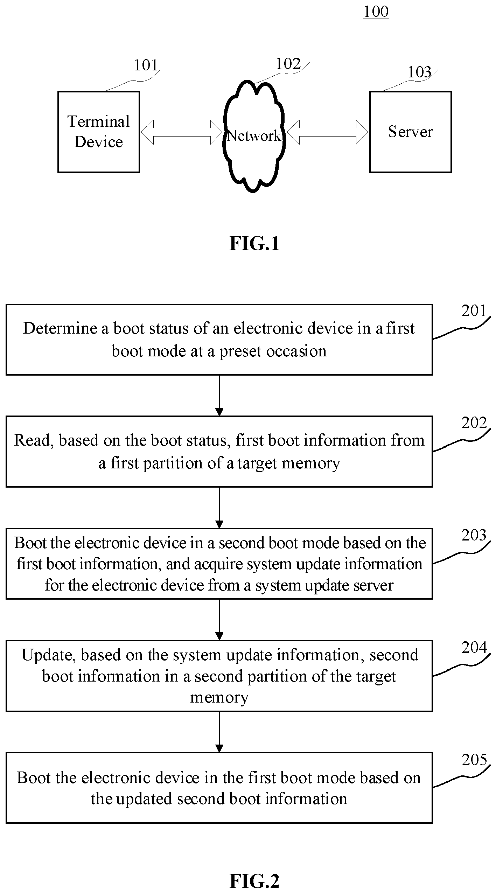

FIG. 1 illustrates an exemplary system architecture 100 to which a memory-partition-based device-startup method or a memory-partition-based device-startup apparatus according to an embodiment of the present disclosure may be applicable.

As shown in FIG. 1, the system architecture 100 may include a terminal device 101, a network 102, and a server 103. The network 102 is a medium for providing a communication link between the terminal device 101 and the server 103. The network 102 may include various types of connections, such as wired and wireless communication links, or fiber optic cables.

The terminal device 101 may directly interact with the server 103 through the network 102 to receive or transmit messages; or may be connected to a relay device having a remote communication function, to interact with the server 103 through the relay device. The terminal device 101 may be any type of electronic device, including but not limited to dedicated devices such as a SOC (System On Chip) chip, a single-chip microcomputer, and a single board computer; mobile terminals such as a mobile phone, a notebook, a digital broadcasting receiver, a PAD (Tablet Computer), and a vehicle-mounted terminal; and fixed terminals such as a digital television and a desktop computer.

The server 103 may be a server that provides various services, such as a backend server that supports an operating system and an application running on the terminal device 101. The backend server may transmit system update information to the terminal device 101, so that the terminal device 101 updates the second boot information based on the system update information.

It should be noted that, the memory-partition-based device-startup method provided in this embodiment of the present disclosure is generally implemented by the terminal device 101. Correspondingly, the memory-partition-based device-startup apparatus is generally disposed in the terminal device 101.

It should be understood that numbers of terminal devices, networks, and servers in FIG. 1 are only for examples. According to implementation requirements, there may be any numbers of terminal devices, networks, and servers.

### Exemplary Method

FIG. 2 is a schematic flowchart of a memory-partition-based device-startup method according to an exemplary embodiment of the present disclosure. This embodiment may be applied to an electronic device (such as a terminal device 101 shown in FIG. 1). As shown in FIG. 2, the method includes the following steps.

Step 201. Determine a boot status of an electronic device in a first boot mode at a preset occasion.

The electronic device may be a terminal device 101 shown in FIG. 1, and the first boot mode may be a mode in which the electronic device is booted during normal running. In the first boot mode, the electronic device is booted by using second boot information in a second partition of a target memory.

The preset occasion may be a process of any boot of the electronic device. For example, the preset occasion may be a process of a most recent boot of the electronic device. In a process of booting the electronic device in the first boot mode, the boot status may be detected, and boot status information representing the boot status may be generated. It may be determined based on the boot status information whether the electronic device is successfully booted in the first boot mode.

Step 202. Read, based on the boot status, first boot information from a first partition of a target memory.

The target memory may be a memory disposed within the electronic device, or may be a memory in another device connected to the electronic device. The target memory may be any type of memory, such as an EMMC memory; or may be another type of memory, such as a RAM (Random Access Memory) or a ROM (Read-Only Memory). The target memory includes a plurality of partitions. The first partition stores the first boot information and the second partition stores the second boot information. The EMMC memory typically includes a plurality of partitions, such as a general-purpose partition and a user data partition (User Data Area), which are physically isolated from one another. Therefore, when the target memory is the EMMC memory, two partitions may be pre-selected from these partitions to serve as the first partition and the second partition.

Typically, the first partition serves as a backup boot partition, in which the first boot information is backup boot information. For example, the first boot information may include a system backup image file. When it is determined that the boot status is that boot fails in the first boot mode, the electronic device may read, from the first partition, the first boot information as a system backup.

Step 203. Boot the electronic device in a second boot mode based on the first boot information, and acquire system update information for the electronic device from a system update server.

The second boot mode may be a boot mode executed when the boot fails in the first boot mode. In the second boot mode, the electronic device may read and run the first boot information, so that the electronic device may boot and run an application. Typically, the first boot information serves as a backup for the second boot information. Therefore, the first partition may store the first boot information and the application for acquiring update information. After the electronic device is booted based on the first boot information, the system update information for the electronic device may be acquired from the system update server. The system update server may be a server 103 shown in FIG. 1. Typically, after the electronic device is booted in the second boot mode, a system update request may be transmitted to the system update server. After receiving the system update request, the system update server transmits the system update information to the electronic device.

Step 204. Update, based on the system update information, second boot information in a second partition of the target memory.

The system update information may be all of second boot information, or may be a part of information included in the second boot information. Original second boot information in the second partition may be updated by the system update information, to obtain updated second boot information.

Step 205. Boot the electronic device in the first boot mode based on the updated second boot information.

The updated second boot information generally includes an image file used by the electronic device for running an operating system normally. The electronic device runs normally after being booted in the first boot mode based on the updated second boot information, thus repair of a boot fault being completed.

Based on the method provided in the foregoing embodiment of the present disclosure, the first boot information and the second boot information are stored in the first partition and the second partition of the target memory, respectively. Based on the boot status of the electronic device in the first boot mode, the electronic device is booted in the second boot mode by using the first startup information. Moreover, the second boot information in the second partition is updated, and the electronic device is booted in the first boot mode by using the updated second boot information. In this way, the first boot information is isolated from the second boot information in the memory, and read and write operations of the processor for the first partition and the second partition do not affect each other. In this case, the second boot information used for normal boot of the electronic device may be updated timely, so that a boot success rate of the electronic device is greatly improved.

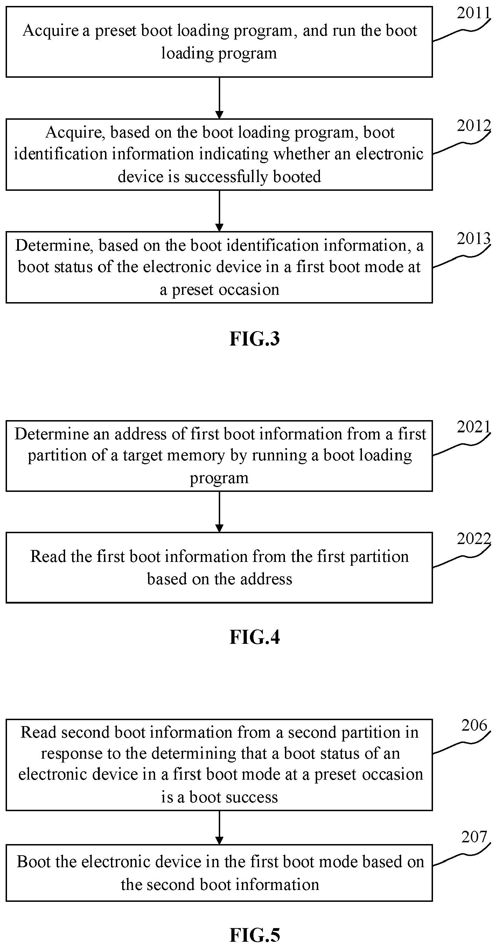

In some optional implementations, as shown in FIG. 3, Step 201 includes the following steps.

Step 2011. Acquire a preset boot loading program, and run the boot loading program.

The boot loading program is a segment of pre-stored program code that may be run to determine whether the electronic device is successfully booted. For example, the boot loading program may be an SPL (Secondary Program Loader) program. The electronic device may acquire the boot loading program from a storage area for storing the boot loading program. The storage area may be set in the target memory. For example, a partition may be preset in the target memory to store the boot loading program. Alternatively, the storage area may be set in a memory dedicated to storing the boot loading program, for example, in a dedicated ROM for booting the electronic device.

Step 2012. Acquire, based on the boot loading program, boot identification information indicating whether the electronic device is successfully booted.

The boot identification information may be acquired in various manners. For example, a dedicated boot detection device (for example, a chip) may be provided to perform real-time communication with the electronic device, wherein if a boot success signal fed back from the electronic device successfully booted is received by the boot detection device, boot identification information indicating successful boot is generated; and of the boot success signal fed back from the electronic device may not be received, boot identification information indicating a boot failure is generated.

Step 2013. Determine, based on the boot identification information, the boot status of the electronic device in the first boot mode at the preset occasion.

The boot identification information may be various types of information, such as a numeral or a symbol. For example, if the boot identification information is a numeral 1, it indicates that the electronic device is successfully booted in the first boot mode. If the boot identification information is a numeral 0, it indicates that the electronic device fails to be booted in the first boot mode.

According to this embodiment, the boot loading program is set, and is run to determine the boot status of the electronic device in the first boot mode. In this way, the boot loading program may be run once the electronic device is powered on, which helps quickly determine the boot status of the electronic device in the first boot mode at the preset occasion.

In some optional implementations, in Step 2011, the boot loading program may be acquired in any one of the following two manners.

Manner I: Read the boot loading program from a boot memory.

Manner II: Read the boot loading program from the first partition.

In the manner I, the boot memory may be a memory dedicated to storing the boot loading program. For example, the boot memory may be a dedicated ROM in the electronic device for booting the electronic device. Content in the ROM may be stored therein in advance, and cannot be changed during subsequent application of the electronic device. For example, typically, the electronic device may first run BOOTROM code after being powered on and starting a boot. The BOOTROM code is a segment of codes cured in the ROM, which may include codes of the boot loading program to implement a function of the boot loading program.

According to the manner I, for reading the boot loading program from the boot memory, the boot loading program may be cured in the boot memory before the boot memory leaves factory. The electronic device may read the boot loading program directly from the boot memory. Logic of operation of the electronic device is relatively simple, thereby helping improve boot efficiency of the electronic device.

In the manner II, the second partition is typically a partition used during normal boot of the electronic device. To ensure that the electronic device may read the boot loading program correctly when a boot failure occurs due to a fault in the second boot information in the second partition, the boot loading program is set in the first partition.

For example, the boot loading program may be an SPL program, which are codes executed during a second phase in a startup process of the electronic device. The boot loading program is mainly responsible for initializing the device, and transferring codes during the startup process to the memory. Code executed during a first phase in the startup process of the electronic device is typically BOOTROM code, which is a segment of codes cured in the ROM of the electronic device. Running of the SPL may be booted by running the codes.

Optionally, in this embodiment, if the SPL program is used as the boot loading program, the SPL program may only implement functions of determining whether the electronic device is successfully booted, and booting the electronic device through the first boot information or the second boot information. In other words, the codes of the SPL program are less as possible, and are not updated together with the second boot information in the second partition, so as to reduce impact on the startup process because the SPL program may not be updated.

According to the manner II, by reading the boot loading program from the first partition, the boot loading program in the first partition may be run when there is a fault in the second boot information in the second partition. Running of the boot loading program is not affected by the second partition, so that the boot status of the electronic device in the first boot mode is accurately determined. In addition, the boot loading program is set in the first partition instead of in the boot memory according to the manner I, so that there is no need to modify the program that have been cured in the boot memory. In this case, the programs in the boot memory is simplified, and difficulty of configuring the boot memory is reduced, thereby facilitating flexible adjustment of the boot loading program, and improving convenience of maintaining the electronic device.

In some optional implementations, Step 2012 may include:
acquiring a boot count value from a preset counter based on the boot loading program, and generating the boot identification information based on the boot count value.

The boot count value is a preset value when the electronic device is successfully booted in the first boot mode.

For example, after the electronic device is powered on, execution of a boot loading program is started in the first boot mode based on the second boot information in the second partition, while the counter described above may automatically count (for example, increased by whenever the execution of the boot loading program is started). After successful boot, the boot count value of the counter is set to the preset value (such as 0), and the boot identification information indicating the successful boot is generated. If the boot count value reaches a preset threshold (such as 3) after the boot loading program is executed for a plurality of times, it is determined that the boot has failed, and boot identification information indicating a boot failure is generated.

In this embodiment, by providing the counter to count in the first boot mode, it may be determined quickly and accurately based on the boot count value whether the boot is successful, thereby helping efficiently repair a boot fault in the electronic device.

In some optional implementations, Step 2012 includes:
receiving, based on the boot loading program, external monitoring information transmitted by a preset external monitoring device, and generating the boot identification information based on the external monitoring information.

The external monitoring device is configured to monitor the boot status of the electronic device in the first boot mode in a real-time manner, and to generate the external monitoring information indicating whether the electronic device is successfully booted in the first boot mode.

The external monitoring device may be a dedicated monitoring chip, or may be a general-purpose device connected to the electronic device. For example, when the external monitoring device is a monitoring chip, the monitoring chip may perform heartbeat monitoring on the electronic device, that is, communicate with the electronic device at regular intervals. When the monitoring chip fails to communicate with the electronic device within a preset time threshold, it is determined that the boot of the electronic device in the first boot mode fails. In this case, external monitoring information indicating a boot failure is generated. The external monitoring information may be output and transmitted to the electronic device through a pin of the monitoring chip, and the electronic device receives the external monitoring information and generates the corresponding boot identification information.

According to this embodiment, the external monitoring device is provided, so that the boot status of the electronic device is monitored in a real-time manner, without the boot monitoring program being executed by the electronic device, thereby further quickly and accurately determining whether the boot is successful, and further improving efficiency of repairing the boot fault in the electronic device.

In some optional implementations, Step 2013 includes:
determining that the boot status of the electronic device in the first boot mode at the preset occasion is a boot success, in response to that at least one of the following conditions being met: the boot count value reaching a preset value, and the external monitoring information being preset information.

For example, the preset value is 0, and the preset information is at low level. When the boot is successful, the electronic device sets the boot count value to 0. When the boot is successful, the external monitoring device transmits a low-level signal as external monitoring information to the electronic device through a certain pin of the chip. When the electronic device determines that the boot count value is 0 and/or the external monitoring information is at low level, it is determined that the electronic device is successfully booted in the first boot mode.

According to this embodiment, by considering the boot count value together with the external monitoring device to determine whether the electronic device is successfully booted, more determination conditions may be introduced, which helps improve accuracy of determining the boot status of the electronic device.

In some optional implementations, as shown in FIG. 4, Step 202 includes the following steps.

Step 2021. Determine an address of the first boot information from the first partition of the target memory by running the boot loading program.

Step 2022. Read the first boot information from the first partition based on the address.

In this embodiment, the boot loading program may be used not only to determine the boot status of the electronic device, but also to read the first boot information from the first partition. For reading the first boot information, the address of the first boot information may be determined first. The address may be determined when the first boot information is pre-stored in the first partition, and may be acquired by the electronic device. Subsequently, the electronic device may read the first boot information from the first partition based on the address.

According to this embodiment, by configuring the boot loading program to have the function of reading the first boot information, the boot loading program in the first partition may be run when a fault occurs in the second boot information in the second partition, to run quickly and accurately the first boot information, thereby further improving the efficiency of repairing the boot fault in the electronic device.

In some optional implementations, as shown in FIG. 5, after Step 201, the method further includes the following steps.

Step 206. Read the second boot information from the second partition in response to the determining that the boot status of the electronic device in the first boot mode at the preset occasion is boot success.

Step 207. Boot the electronic device in the first boot mode based on the second boot information.

Specifically, when it is determined that the boot status at the preset occasion (for example, the most recent boot) is boot success, it indicates that withat the preset occasion, there is no fault in the second boot information in the second partition, and the second boot information may be directly read to boot the electronic device by the first boot mode.

When booting the electronic device by the first boot mode, if it is determined again that the current boot status is a boot failure, the foregoing Steps 202 to 205 may be performed to ensure that the electronic device may be booted.

According to this embodiment, when it is determined that the electronic device is successfully booted in the first boot mode at the preset occasion, the second boot information is read from the second partition and the electronic device continues to be booted by the first boot mode, thereby ensuring that the electronic device is booted in a normal condition based on the second boot information. The first boot information in the first partition being taken as backup boot information greatly improves the boot success rate of the electronic device.

### Exemplary Apparatus

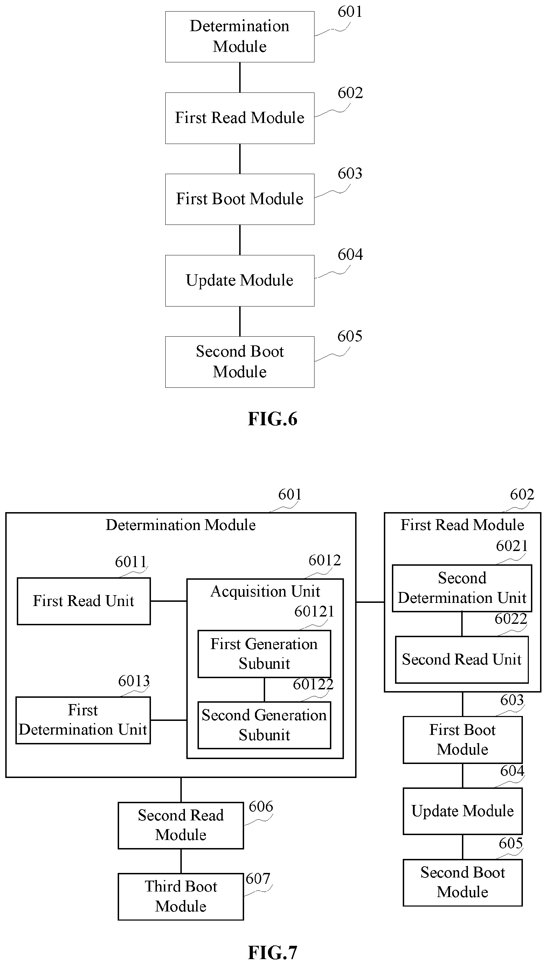

FIG. 6 is a schematic diagram of a structure of a memory-partition-based device-startup apparatus according to an exemplary embodiment of the present disclosure. This embodiment may be applicable to an electronic device. As shown in FIG. 6, the memory-partition-based device-startup apparatus includes: a determination module 601, configured to determine a boot status of the electronic device in a first boot mode at a preset occasion; a first read module 602, configured to read, based on the boot status, first boot information from a first partition of a target memory; a first boot module 603, configured to boot the electronic device in a second boot mode based on the first boot information, and acquire system update information for the electronic device from a system update server; an update module 604, configured to update, based on the system update information, second boot information in a second partition of the target memory; and a second boot module 605, configured to boot the electronic device in the first boot mode based on the updated second boot information.

In this embodiment, the determination module 601 may determine the boot status of the electronic device in the first boot mode at the preset occasion.

The electronic device may be a terminal device 101 shown in FIG. 1, and the first boot mode may be a mode in which the electronic device is booted during normal running. In the first boot mode, the electronic device is booted based on the second boot information in the second partition of the target memory.

The preset occasion may be a process of any boot of the electronic device. For example, the preset occasion may be a process of a most recent boot of the electronic device. In a process of booting the electronic device in the first boot mode, the boot status may be detected, and boot status information representing the boot status may be generated. it may be determined based on the boot status information whether the electronic device is successfully booted in the first boot mode.

In this embodiment, the first read module 602 may read, based on the boot status, the first boot information from the first partition of the target memory.

The target memory may be a memory disposed within the electronic device, or may be a memory in another device connected to the electronic device. The target memory may be any type of memory, such as an EMMC memory; or may be another type of memory, such as a RAM (Random Access Memory) or a ROM (Read-Only Memory). The target memory includes a plurality of partitions. The first partition stores the first boot information and the second partition stores the second boot information. The EMMC memory typically includes a plurality of partitions, such as a general-purpose partition and a user data partition (User Data Area), which are physically isolated from one another. Therefore, when the target memory is the EMMC memory, two partitions may be pre-selected from these partitions to serve as the first partition and the second partition.

Typically, the first partition serves as a backup boot partition, and the first boot information in this partition is backup boot information. For example, the first boot information may include a system backup image file. When it is determined that the boot status is boot failure in the first boot mode, the electronic device may read, from the first partition, the first boot information as a system backup.

In this embodiment, the first boot module 603 may boot the electronic device in the second boot mode based on the first boot information, and acquire the system update information for the electronic device from the system update server.

The second boot mode may be a boot mode executed when the boot fails in the first boot mode. In the second boot mode, the electronic device may read and run the first boot information, so that the electronic device may boot and run various applications. After the electronic device is booted, the system update information for the electronic device may be acquired from the system update server. The system update server may be a server 103 shown in FIG. 1. Typically, after the electronic device is booted in the second boot mode, a system update request may be transmitted to the system update server. After receiving the system update request, the system update server transmits the system update information to the electronic device.

In this embodiment, the update module 604 may update, based on the system update information, the second boot information in the second partition of the target memory.

The system update information may be all of second boot information, or may be a part of information included in the second boot information. Original second boot information in the second partition may be updated by the system update information, to obtain the updated second boot information.

In this embodiment, the second boot module 605 may boot the electronic device in the first boot mode based on the updated second boot information.

The updated second boot information generally includes an image file used by the electronic device for running an operating system normally. The electronic device runs normally after being booted in the first boot mode based on the updated second boot information,, thus repair of a boot fault being completed.

Referring to FIG. 7, FIG. 7 is a schematic diagram of a structure of a memory-partition-based device-startup apparatus according to another exemplary embodiment of the present disclosure.

In some optional implementations, the determination module 601 includes: a first read unit 6011, configured to acquire a preset boot loading program from the first partition, and run the boot loading program; an acquisition unit 6012, configured to acquire, based on the boot loading program, boot identification information indicating whether the electronic device is successfully booted; and a first determination unit 6013, configured to determine, based on the boot identification information, the boot status of the electronic device in the first boot mode at the preset occasion.

In some optional implementations, the first read unit 6011 is further configured to: read the boot loading program from a boot memory; or read the boot loading program from the first partition.

In some optional implementations, the acquisition unit 6012 includes: a first generation subunit 60121, configured to acquire a boot count value from a preset counter based on the boot loading program, and generate the boot identification information based on the boot count value. The boot count value is a preset value when the electronic device is successfully booted in the first boot mode.

In some optional implementations, the acquisition unit 6012 includes: a second generation subunit 60122, configured to receive, based on the boot loading program, external monitoring information transmitted by a preset external monitoring device, and generate the boot identification information based on the external monitoring information. The external monitoring device is configured to monitor the boot status of the electronic device in the first boot mode in a real-time manner, and to generate the external monitoring information indicating whether the electronic device is successfully booted in the first boot mode.

In some optional implementations, the first determination unit 6013 is further configured to: determine that the boot status of the electronic device in the first boot mode at the preset occasion is boot success, in response to that at least one of the following conditions is met: the boot count value reaching a preset value, and the external monitoring information being preset information.

In some optional implementations, the first read module 602 includes: a second determination unit 6021, configured to determine an address of the first boot information from the first partition of the target memory by running the boot loading program; and a second read unit 6022, configured to read the first boot information from the first partition based on the address.

In some optional implementations, the apparatus further includes: a second read module 606, configured to read the second boot information from the second partition in response to the determining that the boot status of the electronic device in the first boot mode at the preset occasion is a boot success; and a third boot module 607, configured to boot the electronic device in the first boot mode based on the second boot information.

Based on the memory-partition-based device-startup apparatus provided in foregoing embodiments of the present disclosure, the first boot information and the second boot information are stored in the first partition and the second partition of the target memory, respectively. Based on the boot status of the electronic device in the first boot mode, the electronic device is booted in the second boot mode by using the first startup information. Moreover, the second boot information in the second partition is updated, and the electronic device is booted in the first boot mode by using the updated second boot information. In this way, the first boot information is isolated from the second boot information in the memory, and read and write operations of the processor for the first partition and the second partition do not affect each other. In this case, the second boot information used for normal boot of the electronic device may be updated timely, so that a boot success rate of the electronic device is greatly improved.

### Exemplary Electronic Device

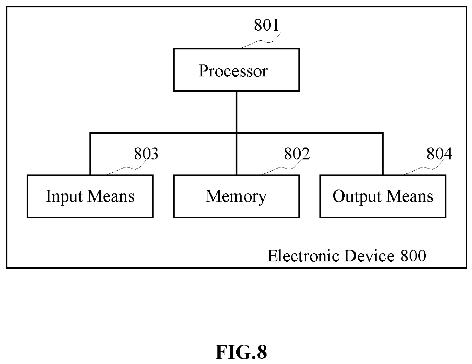

An electronic device according to an embodiment of the present disclosure is described below with reference to FIG. 8. The electronic device may be a terminal device 101 shown in FIG. 1, or a stand-alone device independent from the terminal device 101. The stand-alone device may communicate with the terminal device 101 and a server 103, to receive an input signal therefrom.

FIG. 8 shows a block diagram of an electronic device according to an embodiment of the present disclosure.

As shown in FIG. 8, an electronic device 800 includes one or more processors 801 and a memory 802.

The processor 801 may be a central processing unit (CPU) or another form of processing unit having a data processing capability and/or an instruction execution capability, and may control another component in the electronic device 800 to perform a desired function.

The memory 802 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 801 may execute the program instruction to implement the memory-partition-based device-startup method according to various embodiments of the present disclosure that are described above and/or other desired functions. Various contents such as first boot information and second boot information may also be stored in the computer readable storage medium.

In an example, the electronic device 800 may further include an input means 803 and an output means 804. These components are connected to each other through a bus system and/or another form of connection mechanism (not shown).

For example, the input means 803 may be a device such as a mouse or a keyboard, for inputting boot information and various commands. When the electronic device is a stand-alone device, the input means 803 may be a communication network connector for receiving the boot information and the various commands from the terminal device 101 and the server 103.

The output means 804 may output various information to the outside, including various detection information during a startup process. The output means 804 may include, for example, a display, a speaker, a printer, a communication network, and a remote output means connected by the communication network.

Certainly, for simplicity, FIG. 8 shows only some of components in the electronic device 800 that are related to the present disclosure, and components such as a bus and an input/output interface are omitted. In addition, according to specific application situations, the electronic device 800 may further include any other appropriate components.

### Exemplary Computer Program Product And Computer Readable Storage Medium

In addition to the foregoing methods and device, the embodiments of the present disclosure may also provide a computer program product, which includes computer program instructions. When the computer program instructions are run by a processor, the processor is enabled to perform the steps, of the memory-partition-based device-startup method according to the embodiments of the present disclosure, that are described in the "exemplary method" part described above.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, which stores computer program instructions. When the computer program instructions are run by a processor, the processor is enabled to perform the steps, of the memory-partition-based device-startup method according to the embodiments of the present disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples but are not for limitation, and it may not be considered that these advantages, superiorities, and effects are necessary for each embodiment of the present disclosure. In addition, specific details described above are merely for examples and for ease of understanding, rather than limitations. The details described above do not limit that the present disclosure must be implemented by the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. A memory-partition-based device-startup method, including:
determining a boot status of an electronic device in a first boot mode at a preset occasion;
reading, based on the boot status, first boot information from a first partition of a target memory;
booting the electronic device in a second boot mode based on the first boot information, and acquiring system update information for the electronic device from a system update server;
updating, based on the system update information, second boot information in a second partition of the target memory; and
booting the electronic device in the first boot mode based on the updated second boot information.

2. The method according to claim 1, wherein the determining a boot status of an electronic device in a first boot mode at a preset occasion includes:
acquiring a preset boot loading program, and running the boot loading program;
acquiring, based on the boot loading program, boot identification information indicating whether the electronic device is successfully booted; and
determining, based on the boot identification information, the boot status of the electronic device in the first boot mode at the preset occasion.

3. The method according to claim 2, wherein the acquiring a preset boot loading program includes:
reading the boot loading program from a boot memory; or
reading the boot loading program from the first partition.

4. The method according to claim 2, wherein the acquiring, based on the boot loading program, boot identification information indicating whether the electronic device is successfully booted includes:
acquiring a boot count value from a preset counter based on the boot loading program, and generating the boot identification information based on the boot count value, wherein the boot count value is a preset value when the electronic device is successfully booted in the first boot mode.

5. The method according to any one of claims 2 to 4, wherein the acquiring, based on the boot loading program, boot identification information indicating whether the electronic device is successfully booted includes:
receiving, based on the boot loading program, external monitoring information transmitted by a preset external monitoring device, and generating the boot identification information based on the external monitoring information, wherein the external monitoring device is configured to monitor the boot status of the electronic device in the first boot mode in a real-time manner, and to generate the external monitoring information indicating whether the electronic device is successfully booted in the first boot mode.

6. The method according to claim 5, wherein the determining, based on the boot identification information, the boot status of the electronic device in the first boot mode at the preset occasion includes:
determining that the boot status of the electronic device in the first boot mode at the preset occasion is a boot success, in response to that at least one of the following conditions is met: the boot count value reaching a preset value, and the external monitoring information being preset information.

7. The method according to claim 2, wherein the reading first boot information from a first partition of a target memory includes:
determining an address of the first boot information from the first partition of the target memory by running the boot loading program; and
reading the first boot information from the first partition based on the address.

8. The method according to claim 1, after the determining a boot status of an electronic device in a first boot mode at a preset occasion, the method further includes:
reading the second boot information from the second partition in response to the determining that the boot status of the electronic device in the first boot mode at the preset occasion is the boot success; and
booting the electronic device in the first boot mode based on the second boot information.

9. A memory-partition-based device-startup apparatus, including:
a determination module, configured to determine a boot status of an electronic device in a first boot mode at a preset occasion;
a first read module, configured to read, based on the boot status, first boot information from a first partition of a target memory;
a first boot module, configured to boot the electronic device in a second boot mode based on the first boot information, and acquire system update information for the electronic device from a system update server;
an update module, configured to update, based on the system update information, second boot information in a second partition of the target memory; and
a second boot module, configured to boot the electronic device in the first boot mode based on the updated second boot information.

10. The memory-partition-based device-startup apparatus according to claim 9, wherein the determination module includes:
a first read unit, configured to acquire a preset boot loading program, and run the boot loading program;
an acquisition unit, configured to acquire, based on the boot loading program, boot identification information indicating whether the electronic device is successfully booted; and
a first determination unit, configured to determine, based on the boot identification information, the boot status of the electronic device in the first boot mode at the preset occasion.

11. The memory-partition-based device-startup apparatus according to claim 10, wherein the first read unit is further configured to:
read the boot loading program from a boot memory; or
read the boot loading program from the first partition.

12. The memory-partition-based device-startup apparatus according to claim 10, wherein the acquisition unit includes:
a first generation subunit, configured to acquire a boot count value from a preset counter based on the boot loading program, and generate the boot identification information based on the boot count value, wherein the boot count value is a preset value when the electronic device is successfully booted in the first boot mode.

13. The memory-partition-based device-startup apparatus according to claim 9, further including:
a second read module, configured to read the second boot information from the second partition in response to the determining that the boot status of the electronic device in the first boot mode at the preset occasion is the boot success; and
a third boot module, configured to boot the electronic device in the first boot mode based on the second boot information.

14. A non-transitory computer readable storage medium, in which a computer program is stored, wherein the computer program, when executed by a processor, causes the processor to implement the method according to any one of claims 1 to 8.

15. An electronic device, including:
a processor; and
a memory, configured to store a processor-executable instruction, wherein
the processor is configured to read the executable instruction from the memory, and execute the instruction to implement the method according to any one of claims 1 to 8.
